# EUROPEAN PATENT APPLICATION

(11) **EP 3 410 331 A1**
(43) Date of publication of application: **05.12.2018**
(21) Application number: 17020229.5
(22) Date of filing: 29.05.2017
(51) Int. Cl.: G06F 21/34, G06F 21/36, H04L 9/32, H04L 29/06, H04W 12/06, G06Q 20/32, G06Q 20/40

(54) **A SYSTEM AND METHOD FOR TRANSFERRING DATA TO AN AUTHENTICATION DEVICE**

(71) Applicant: OneSpan International GmbH, 8152 Glattbrugg (CH)
(72) Inventor: The designation of the inventor has not yet been filed
(74) Representative: IPLodge bvba

(57) **Abstract**

Methods and systems for transferring data to authentication devices are disclosed.

## Description

### Field of the invention

The invention relates to securing remote access to computers and applications and remote transactions over computer networks. More in particular the invention relates to transferring data to an authentication device.

### Background of the invention

As remote access of computer systems and applications grows in popularity, the number and variety of transactions which are accessed remotely over public networks such as the Internet has increased dramatically. This popularity has underlined a need for security; in particular: how to ensure that people who are remotely accessing a (remote) application are who they claim they are, how to ensure that transactions being conducted remotely are initiated by legitimate individuals, and how to ensure that transaction data have not been altered before being received at a remote application.

In some cases, a user may be accessing and interacting with a remote application using for example a client computing device. The client computing device may comprise a user's personal computing device such as a user's smartphone, tablet or Personal Computer (PC). The client computing device may be connected over a network such as the internet to a remote server computer that may be hosting the remote application. The user may for example use the client computing device to login to the remote application and/or to submit a transaction request to the remote application. In what follows the client computing device may also be referred to as the access device.

In some cases, the interaction between the user and the remote application may be secured by the usage of a dynamic credential. For example at some point during the interaction (e.g., at login or when the user submits a transaction request) the user may be required to provide a dynamic credential to the remote application that the user is accessing. In some cases, such a dynamic credential may be generated by a personal authentication device that may be associated with the user and may be sent to the remote application. Upon receipt of the dynamic credential the remote application may then verify the dynamic credential that it received and may, for example, grant access to the user or execute the requested transaction on condition that the verification of the received dynamic credential was successful.

In some cases, the dynamic credential may be generated using a cryptographic algorithm that is parameterized with a secret data element, such as for example a secret cryptographic key. This secret data element may be associated with the user whereby the value of the secret data element may be different for different users. In some cases, the dynamic credential may be generated by cryptographically combining the value of a dynamic variable with the value of the secret data element that is associated with the user.

In some cases, the dynamic variable may be a time-based variable, such as for example the time provided by a clock. In some cases, the dynamic variable may be a challenge-based variable that may be based on a challenge that for example may be provided by the remote application. In some cases, the dynamic variable may be an event-based variable. For example in some cases, the dynamic variable may comprise a value that changes each time a certain event (such as the generation of dynamic credential using the value of the dynamic variable) occurs. For example, in some cases the event-based dynamic variable may comprise or may be based on a counter that is incremented each time on the occurrence of a certain event such as the generation of the dynamic credential. In some cases, the dynamic variable may be based on data representing a user's transaction request. In some cases, the dynamic variable may be or may comprise any combination of the above types of dynamic variables.

In some cases, the dynamic credential may comprise a dynamic password. If the dynamic credential is cryptographically linked to transaction data that characterize the transaction, then the dynamic credential may also be referred to as a signature or transaction data signature.

An algorithm to generate a dynamic credential may be based on symmetric cryptographic algorithms, such as the Advanced Encryption Standard (AES) algorithm, and/or on asymmetric cryptographic algorithms, such as the Rivest-Shamir-Adleman (RSA) algorithm. An algorithm to generate a dynamic credential may be based on cryptographic encryption/decryption algorithms (such as the Advanced Encryption Standard (AES) or RSA), and/or on algorithms to generate Message Authentication Codes (MAC), and/or on cryptographic one-way functions, and/or on cryptographic hashing or digital digest algorithms (such as for example one of the algorithms of the Secure Hash Algorithms (SHA) family of cryptographic hash functions or the MD5 algorithm), and/or cryptographic keyed hashing algorithms (such as the keyed-hash message authentication code HMAC-SHA1 or HMAC-MD5).

In some cases, the user's personal authentication device may be associated with the user. In some cases, the user's personal authentication device may comprise a hardware device such as for example a smart card or an authentication token. In some cases, the user's personal authentication device may be fully dedicated to providing the authentication and data signature functions as described above

In some cases the user's personal authentication device may consist of a single electronic device. In some cases the user's personal authentication device may comprise the combination of a (removable) smart card and a smart card reader. In some cases the smart card is adapted to store one or more cryptographic keys that may be used in a cryptographic algorithm for the generation of a dynamic credential. In some cases the smart card may be further adapted to perform a cryptographic algorithm parameterized with one or more of these stored keys as part of the generation of a dynamic credential. In some cases a dynamic credential may be generated essentially by the smart card performing a cryptographic algorithm parameterized with one or more of these stored keys. In other cases the dynamic credential may be generated by a cryptographic algorithm that may be performed partially by the smart card and partially by the smart card reader. In some cases the smart card may be EMV (Europay-Mastercard-VISA) compliant or compatible. In some cases the smart card reader may be CAP (Chip Authentication Programme) compliant or compatible.

In some cases, the user's personal authentication device may be adapted to store a secret key and to perform a cryptographic algorithm that is parameterized with the stored secret key to generate a cryptographic result whereby the dynamic credential is generated as a function of this generated cryptographic result. In some cases the personal authentication device may receive on or more data values and use these received data values as input variables for the aforementioned cryptographic algorithm. In some embodiments the personal authentication device may manage an internal dynamic variable, such as a time value provided by a clock that may be comprised in the personal authentication device or a counter that may be stored in the personal authentication device's non-volatile memory and that the personal authentication device may increment each time that it performs the aforementioned cryptographic algorithm.

In some cases, the authentication device may use data that it receives from or through the user's client computing device in the generation of a dynamic credential. For example, the authentication device may receive a challenge (which may have been generated by the remote application) from the user's client computing device and use the challenge as input data for a cryptographic algorithm to compute a response which may be comprised in the dynamic credential, or the authentication device may receive transaction data representing a transaction request that the user wants to submit to the remote application and use that transaction data as input data for a cryptographic algorithm to compute an (electronic) signature which may be comprised in the dynamic credential.

Various solutions may be used to transfer input data that the authentication device may use for the generation of a dynamic credential from the user's client computing device to the user's personal authentication device.

### Manual data transfer

In some solutions, transfer of input data from the user's client computing device to the user's personal authentication device may be done by the user manually entering data into the authentication device using a user input interface (such as for example a keyboard) of the authentication device. Transfer of data from the authentication device to the computing device (such as for example a dynamic credential generated by the authentication device) may be done by the user receiving output data from a user output interface of the authentication device and the user manually copying and forwarding the output data to the client computing device. For example, output data may be displayed on a display of the authentication device to be manually copied and forwarded to the client computing device by the user.

### USB or Bluetooth connection

In other solutions the user's personal authentication device may be locally connected to the user's client computing device through a local wired or wireless digital data connection such as a USB (Universal Serial Bus) connection of a Bluetooth® connection. The terminology 'local' in this context implies that both the user's personal authentication device and the user's client computing device are located in the immediate vicinity of the user such that the user can physically interact with both the personal authentication device and the client computing device (i.e., the user receiving output data from a user output interface of the personal authentication device and/or the client computing device and/or the user providing input data to a user input interface of the personal authentication device and/or the client computing device, such as for example reading text on a display and/or entering data on a keyboard). The terminology 'local digital data connection' in this context furthermore implies a data connection whereby digital data and digital messages are being encoded in electrical or electro-magnetic signals that are emitted and/or received by the user's client computing device through specific components of the computing device that are not comprised in the user interface of the computing device. The computing device and the authentication device may use this local connection to exchange data, which may include transferring from the user's client computing device to the user's personal authentication device input data that the authentication device may use for the generation of a dynamic credential. In some cases, the same local connection may also be used to transfer data from the authentication device to the computing device (such as for example a dynamic credential generated by the authentication device).

### 2D-barcode

In still other solutions the user's client computing device may transfer input data to the user's personal authentication device by displaying on its display a 2D-barcode that is encoded with a message comprising the input data to be transferred, and the authentication device may comprise a camera and may be adapted to capture a 2D-barcode displayed on the display of a computing device and to decode the 2D-barcode and extract the input data from the 2D-barcode. In some cases, data to be transferred from the authentication device to the computing device (such as for example a generated dynamic credential) may be displayed on a display of the authentication device to be manually copied and forwarded to the client computing device by the user.

The discussion of the background to the invention herein is included to explain the context of the invention. This shall not be taken as an admission that any of the material discussed above was published, known or part of the common general knowledge at the priority date of this application.

### Disclosure of the invention

### Technical problem

The inventors have realized that most authentication devices only support one input data transfer mechanism to transfer input data from a user's access device to that user's personal authentication device, and that also many remote applications only support a single input data transfer mechanism to transfer input data from a user's access device to that user's personal authentication device. The inventors have further realized that in such circumstances a change in the architecture of a remote application such that it no longer supports a particular data transfer mechanism and instead uses another, possibly incompatible, data transfer mechanism, may have the effect that existing authentication devices that until that moment were in use by users of the remote application may no longer be useable with that remote application. This may cause inconvenience for the users and additional costs to replace the now obsolete authentication devices.

In particular, most authentication devices relying on a local wired or wireless digital data connection with the user's access device to obtain input data are not equipped with the capabilities and components (such as a camera) to capture a 2D-barcode that is being displayed on the display of the user's access device. If a remote application was supporting an input data transfer mechanism that is based on a local wired or wireless digital data connection between the user's access device and the user's personal authentication device, and the architecture of the remote application is changed to henceforth no longer support that local digital data connection but instead rely on an input data transfer mechanism that is based on the displaying on the display of the user's access device of a 2D-barcode that may be encoded with input data for the user's personal authentication device, then users may no longer be able to successfully use their existing authentication devices that require a local wired or wireless digital data connection.

What is needed is a solution for using a personal authentication device that is not capable of capturing a 2D-barcode that is being displayed on the display of the user's access device when the remote application server assumes that the user has a personal authentication device that is capable of capturing a 2D-barcode.

### Technical solution

One solution to the aforementioned problem is the invention described in the remainder of this description.

In some aspects of the invention, the user's access device comprises a virtual scanner software component.

The virtual scanner software component may be adapted to emulate, in cooperation with a user's personal authentication device that is not capable of capturing a 2D-barcode, a personal authentication device that is capable of capturing a 2D-barcode.

The virtual scanner software component may be adapted to capture a 2D barcode that may have been received by the access device from a remote application and/or that may be displayed on a display of the access device. The 2D barcode may have been encoded, for example by the remote application, with data to be transferred to an authentication device capable of capturing and decoding the 2D barcode. The virtual scanner software component may be adapted to decode the captured 2D barcode. In some embodiments the virtual scanner software component may be adapted to extract data from the 2D barcode to be transferred to an authentication device. The virtual scanner software may be adapted to generate input data as a function of the extracted data. In some embodiments the input data may comprise the extracted data entirely or partially. In some embodiments the input data may comprise a reformatting of a part or all of the extracted data.

The virtual scanner software component may be further adapted to transfer the input data to a personal authentication device of the user through an input data transfer mechanism that is supported by the personal authentication device and that is different from the input data transfer mechanism based on scanning 2D barcodes. For example the user's personal authentication device may be locally connected to the access device through a local wired or wireless digital data connection (such as a USB or Bluetooth® connection), and the virtual scanner software component may be adapted to transfer the data that it has extracted from the 2D barcode to the user's personal authentication device over the local wired or wireless digital data connection. In some embodiments the virtual scanner software component may be adapted to establish the local wired or wireless digital data connection with the user's personal authentication device. For example, in some embodiments the user's personal authentication device may comprise a connected smart card reader that is connected to the user's access device for example through a USB connection. The virtual scanner software component may be adapted to communicate and exchange data with the connected smart card reader. The virtual scanner software component may be adapted to generate smart card commands and send the generated smart card commands to a smart card that may be inserted in the connected smart card reader, and to receive from the connected smart card reader responses to these smart card commands that may have been generated by the inserted smart card in response to these smart card commands. The virtual scanner software component may further be adapted to generate smart card reader commands and send the generated smart card reader commands to the connected smart card reader, and to receive from the connected smart card reader that may have been generated by the smart card reader in response to these smart card commands.

The virtual scanner software component may be further adapted to transfer the input data to the user's personal authentication device encoded or embedded in one or more smart card commands or smart card reader commands.

The virtual scanner software component may be adapted to use a smart card API (Application Programming Interface), such as for example the PC/SC (Personal Computer/Smart Card) API, to exchange data such as the aforementioned commands and responses with the connected smart card reader. The virtual scanner software component may be adapted to use a USB Smart Card Class driver to communicate and exchange data such as the aforementioned commands and responses with the connected smart card reader. For example, the virtual scanner software component may be adapted to use a CCID (Chip Card Interface Device) driver to communicate with the connected smart card reader.

The user's personal authentication device may be adapted to receive over the local wired or wireless digital data connection the input data generated or extracted from the 2D barcode by the virtual scanner software component. The user's personal authentication device may be further adapted to use the received input data to generate authentication data which may comprise a dynamic credential.

In some embodiments the user's personal authentication device may be further adapted to communicate the generated authentication data or dynamic credential to the user, e.g., by displaying the generated dynamic credential on a display of the user's personal authentication device. In some embodiments the user's personal authentication device may be further adapted to communicate, e.g., over the local wired or wireless digital data connection, the generated authentication data or dynamic credential to the virtual scanner software component.

In some embodiments, the virtual scanner software component may be adapted to obtain a dynamic credential. In some embodiments, the virtual scanner software component may be adapted to obtain or receive, for example over the local wired or wireless digital data connection, authentication data or a dynamic credential generated by the user's personal authentication device. In some embodiments the virtual scanner software component may receive the authentication data or dynamic credential encoded or embedded in one or more of the aforementioned smart card responses or smart card reader responses.

In some embodiments, the virtual scanner software component may be further adapted to obtain or generate a dynamic credential as a function of authentication data generated by and received from the user's personal authentication device. For example in some embodiments the virtual scanner software may be adapted to obtain a dynamic credential by selecting a part of the received authentication data and reformatting the selected part of the received authentication data.

In some embodiments the virtual scanner software component may be further adapted to present the obtained dynamic credential to the user, e.g., by displaying the obtained dynamic credential on a display of the user's access device that the virtual scanner software component is running on. The user may then forward the presented dynamic credential to the remote application, e.g., by copying the presented dynamic credential into a web form.

In some embodiments the virtual scanner software component may be further adapted to forward the obtained dynamic credential to the remote application.

In some embodiments the virtual scanner software component may comprise a native application, or a browser plug-in or browser extension, or a java component, or a service or a hook on a video driver of the access device. In some embodiments the virtual scanner software component may comprise a sniping tool that may be adapted to capture a part of the screen of the access device.

In some embodiments the virtual scanner software component may be running permanently, for example as a service permanently running on the access device in the background or as a hook on a driver. In some embodiments the virtual scanner software component may be activated manually by the user. In some embodiments the virtual scanner software component may be activated automatically by the occurrence of a specific event. For example, in some embodiments the virtual scanner software component may be activated automatically if the access device receives a message with a specific MIME type, or if the access device receives a web page containing a specific HTML tag. In some embodiments the virtual scanner software component may be activated automatically by a component embedded in a web page such as for example a java script component.

In some embodiments the virtual scanner software component may be adapted to capture, continuously or upon being triggered by a specific event, a part or the entirety of what is being displayed on a display of the access device and to analyse the captured part of the display to search in the captured part of the display for the occurrence of a 2D barcode in an appropriate format. In some embodiments the virtual scanner software component may be adapted, upon detecting the presence of a 2D barcode in an appropriate format, to decode the 2D barcode and extract payload data as explained in more detail elsewhere. In some embodiments the virtual scanner software may be adapted to receive directions of the user to find or receive a 2D barcode to process. For example, in some embodiments a user might right-click on a 2D barcode embedded in a webpage and select the virtual scanner software component to direct the access device to activate the virtual scanner software component and to provide the 2D barcode to the virtual scanner software component.

More details of these various embodiments are provided in the paragraphs below.

### Brief Description of the Drawings

The foregoing and other features and advantages of the invention will be apparent from the following, more particular description of embodiments of the invention, as illustrated in the accompanying drawings.
**Figure 1** schematically illustrates an authentication device according to an aspect of the invention.
**Figure 2** schematically illustrates an exemplary system according to an aspect of the invention.

### Detailed description

Some implementations of the present invention are discussed below. While specific implementations are discussed, it should be understood that this is done for illustration purposes only. A person skilled in the relevant art will recognize that other components and configurations may be used without parting from the spirit and scope of the invention. Various specific details are provided in order to enable a thorough understanding of the invention. However, it will be understood by a person skilled in the relevant art that the present invention may be practiced without these specific details. In other instances, well-known methods, procedures, components and circuits have not been described in detail so as not to obscure the present invention. Various modifications to the described embodiments will be apparent to persons skilled in the art, and the general principles of the embodiments described in detail below may be applied to other embodiments.

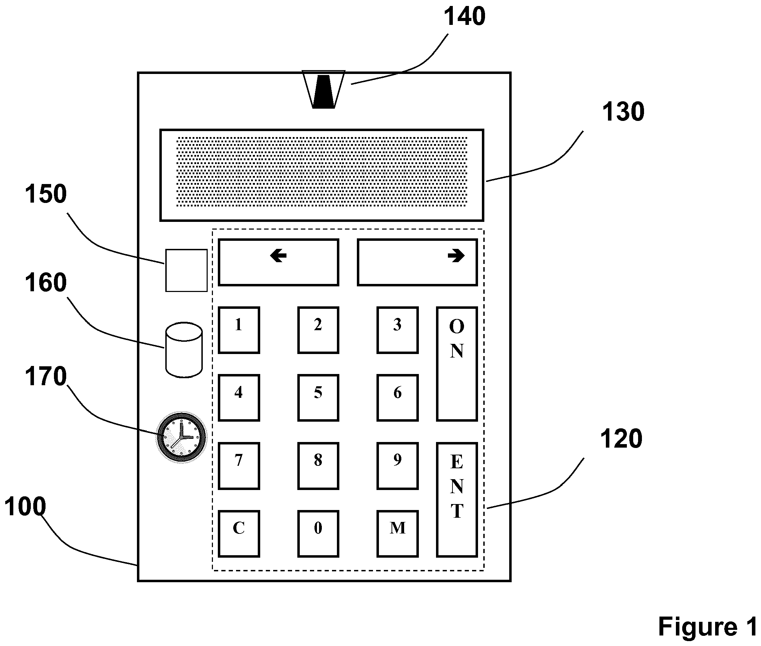

**Figure 1** schematically illustrates an exemplary electronic apparatus **(100)** according to an aspect of the invention. The apparatus of figure 1 comprises an authentication device. In some embodiments the authentication device is adapted to generate dynamic credentials on behalf of a user. In some embodiments the dynamic credentials generated by the authentication device may comprise for example one-time passwords and/or electronic signatures over for example transaction data and/or responses to challenges. In some embodiments the authentication device may comprise a smart card reader and a smart card.

### Processor (150) and memory (160).

The authentication device may comprise a digital data processing component **(150)** that may be adapted to execute a set of data processing instructions. In some embodiments the data processing component (150) may comprise for example one or more microprocessors, microcontrollers, Digital Signal Processor (DSP) chips, Field Programmable Gate Arrays (FPGA), etcetera. In some embodiments the digital data processing component may execute the instructions comprised in one or more pieces of software. These one or more pieces of software may for example comprise an operating system (such as for example Android or iOS) and/or an authentication application which may be adapted to generate dynamic credentials as explained in more details elsewhere in this description. In some embodiments the dynamic credentials generated by the authentication application may comprise for example one-time passwords and/or electronic signatures over for example transaction data and/or responses to challenges.

The authentication device may comprise a memory component **(160)** which may be coupled to the digital data processing component. In some embodiments the memory component may comprise a program memory component that is adapted to store software or firmware to be executed by the data processing component. For example, in some embodiments the software or firmware stored in the memory of the authentication device may comprise an operating system and/or an authentication application.

In some embodiments the memory component (160) may comprise a data memory component that is adapted to permanently or temporarily store data. In some embodiments the data memory component may be adapted to securely store secret data such as cryptographic keys or PIN or password reference data.

The memory component may for example comprise RAM (Random Access Memory) memory, ROM (Read-Only Memory) memory, EPROM (Erasable Programmable Read-Only Memory) memory, one-time programmable memory, flash memory, solid-state memory, a hard-disk, etc.

### User interface (120, 130)

In some embodiments the authentication device may comprise a user interface **(120, 130)** to interact with a user, e.g. to exchange data, information and/or commands with a user.

In some embodiments the authentication device's user interface may comprise an output user interface **(130)** for presenting information and/or data to a user of the authentication device. In some embodiments the output user interface may comprise for example a display **(130)** or an audio output interface. In some embodiments the authentication device's user interface may comprise an input user interface **(120)** for receiving inputs from a user such as for example input data (like a challenge or transaction data) or instructions (like a confirmation or cancellation) or a PIN. In some embodiments the input user interface may comprise for example a keyboard **(120).** In some embodiments the authentication device's user interface may comprise a touch screen which may be adapted to offer both the functions of a user output interface and a user input interface.

### Data input interface (140)

In some embodiments the authentication device may comprise a digital data input interface for (locally) connecting the authentication device for example to a user's client computing device or access device. In some embodiments the digital data input interface may support a local wired or wireless digital data connection (such as a USB or Bluetooth® connection). In some embodiments the authentication device's digital data input interface may be adapted to receive digital data messages.

In some embodiments the digital data input interface may comprise a wireless data communication interface. In some embodiments the wireless data communication interface may comprise an antenna. In some embodiments the wireless data communication interface may be adapted to receive a modulated radio signal encoded with a digital data message. For example in some embodiments the wireless data communication data interface may comprise a Bluetooth® interface.

In some embodiments the digital data input interface may comprise a wired data communication interface. In some embodiments the wired data communication interface may comprise a connector (for example a USB connector) for connecting a data cable (such as a USB cable) to connect the authentication device to for example a user's access device. In some embodiments the wired data communication interface may be adapted to receive a modulated electrical signal encoded with a digital data message. For example in some embodiments the wired data communication interface may comprise a USB interface.

In some embodiments the authentication device may be adapted to use the data input interface to receive a digital data message. In some embodiments the digital data message may comprise transaction data and the authentication application may be adapted to retrieve the transaction data comprised in the digital data message and use the retrieved transaction data for further processing, e.g. to display to the user and/or to generate a corresponding dynamic credential as is described in more detail elsewhere in this description.

### Credential generation

The authentication device may be adapted to generate dynamic credentials as explained in more detail elsewhere in this description. In some embodiments the data processing component **(150)** may be adapted to perform cryptographic calculations to generate the dynamic credentials. In some embodiments the authentication device may be adapted to generate dynamic credentials using cryptographic keys that may be stored permanently or temporarily in the memory component **(160)** or that the authentication device may derive from data stored permanently or temporarily in the memory component **(160).** In some embodiments the authentication device may be adapted to generate dynamic credentials using data that is part of an instance of an authentication application stored in the memory component **(160).**

In some embodiments the authentication device or authentication application may be adapted to generate dynamic credentials using a dynamic variable that may comprise an internal value provided by the token. For example, in some embodiments the authentication device may comprise a clock **(170)** and the authentication device or authentication application may use as an internal value the time value provided by that clock. In some embodiments the authentication device may maintain an event-related variable such as a counter as part of the data of an instance of the authentication application and the authentication device or authentication application may be adapted to use the value of that event-related variable as an internal value to generate a dynamic credential for that instance and update the value of that event-related variable as a function of the current value (e.g. by incrementing or decrementing a counter value) each time the authentication device or authentication application uses the value of that counter to generate a dynamic credential. For example, in some embodiments the updated value of the event-related variable may be calculated by applying a hash function to the current value of the event-related variable.

In some embodiments the authentication device may be adapted to generate dynamic credentials using a dynamic variable that may comprise an external value provided to the authentication device. In some embodiments such an external value may comprise a challenge generated by a remote application or transaction data to be signed. In some embodiments the external value may be manually provided to the authentication device or authentication application by the user by using the user input interface of the token. For example, the token may capture a challenge or transaction data the user may enter as a string of characters on a keyboard comprised in the token. In some embodiments the external value is provided comprised in a message or command that is received by the authentication device or authentication application by means of the authentication device's data input interface.

In some embodiments the authentication device or authentication application may be adapted to present the generated dynamic credential to the user. For example, in some embodiments the authentication device or authentication application may display the generated dynamic credential as a string of readable characters on the display of the authentication device. In some embodiments the string may comprise only decimal characters. In other embodiments the string may comprise alphanumerical characters.

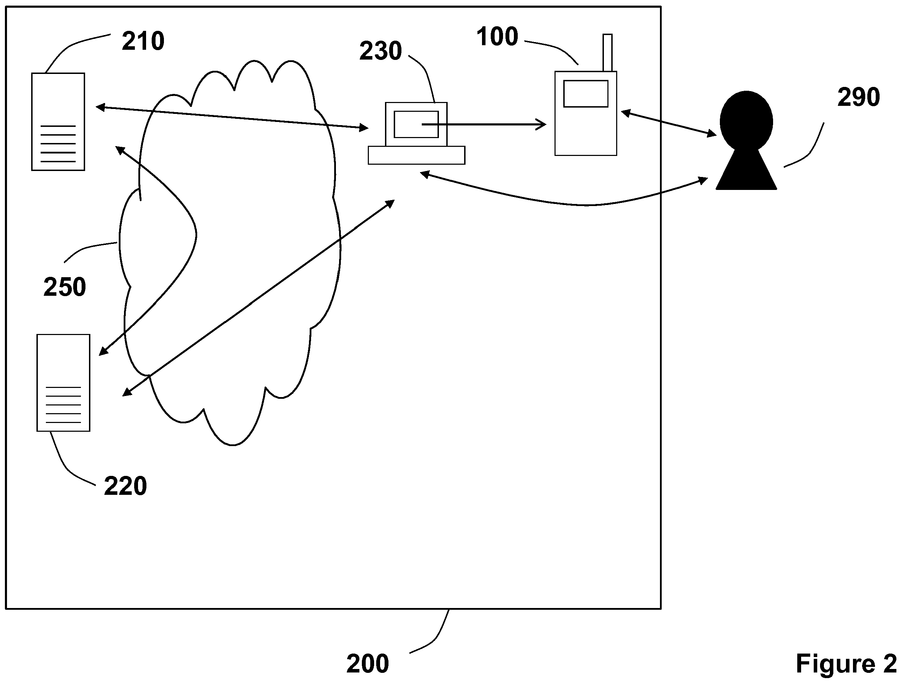

**Figure 2** schematically illustrates an exemplary system according to an aspect of the invention.

In one embodiment a system **(200)** according to the invention may comprise the following components:

One or more remote application server computers **(210).** The one or more remote application server computers **(210)** may host one or more remote applications which may be remotely accessible by one or more users of a plurality of users **(290).** The one or more remote applications may comprise for example any of the remote applications described elsewhere in this description. A remote application server computer **(210)** may for example comprise a web server. The one or more remote applications may be under control of one or more application providers. The one or more remote applications may be adapted to generate a 2D barcode encoded with a payload comprising data (such as a challenge or transaction data) to be transferred to a user's authentication device.

A plurality of client computing devices **(230)** that may allow one or more users of the plurality of users **(290)** to remotely access the one or more remote applications and hence may also be referred to as access devices. A client computing device or access device **(230)** may for example comprise a PC (personal computer), a laptop or a tablet computer. A client computing device or access device may comprise a virtual scanner software component as described elsewhere in this description.

A computer network **(250)** that connects the one or more application server computers **(210)** and the plurality of client computing devices or access devices **(230).** In some embodiments the computer network **(210)** may comprise the internet. In some embodiments the computer network **(210)** may comprise a public telephone network. In some embodiments the computer network **(210)** may comprise a wireless telephony network.

A plurality of authentication devices **(100)** as described in more detail elsewhere in this description, for example in connection to figure 1. The authentication devices **(100)** may be distributed among the plurality of users. In some embodiments the authentication devices **(100)** may be distributed among the users by the one or more application providers. In some embodiments the authentication devices may comprise a combination of a smart card reader and an inserted smart card.

Each of the plurality of authentication devices may be connected through a local wired or wireless digital data connection with one of the plurality of client computing devices **(230)** as explained in more detail elsewhere in this description.

One or more credential verification servers **(220).** In some embodiments each of the one or more credential verification servers **(220)** is connected to at least one of the one or more application servers **(210)** and may be configured to verify dynamic credentials that a remote application hosted by the one or more application servers **(210)** connected to the verification server may receive from users **(290)** interacting with such remote application. In some embodiments each of the application servers **(210)** may be connected to at least one of the one or more credential verification servers **(220)** and may be configured to forward to one of the connected one or more credential verification servers **(220)** dynamic credentials received by a remote application hosted by the application server **(210)** from a user **(290)** interacting with the remote application. Upon receiving a dynamic credential from a remote application, a credential verification server may retrieve data associated with the user and/or the authentication device **(100)** by which the dynamic credential has been generated and use that data to cryptographically verify the validity of the received dynamic credential. For example, in some embodiments the credential verification server may generate a reference value for the dynamic credential and compare the generated reference value with the received dynamic credential and consider the verification of the received dynamic credential successful if the received dynamic credential matches the generated reference value. In some embodiments the credential verification server may generate the reference value by applying a cryptographic algorithm to reference input data such as transaction data that the server may have received and/or the value of a server copy of a counter variable or event-related variable associated with the user and/or a time value. In some embodiments the credential verification server may parameterize this cryptographic algorithm with a cryptographic key which may comprise or which may be derived from a secret value associated with the user. The credential verification server **(220)** may return a signal to the remote application to indicate whether the verification was successful. If the signal indicates that the verification was successful, the remote application may use that information in deciding whether or not to grant access to the user or whether or not to perform a certain operation requested by the user (such as performing a transaction submitted by the user).

A number of implementations have been described. Nevertheless, it will be understood that various modifications may be made. For example, elements of one or more implementations may be combined, deleted, modified, or supplemented to form further implementations. Accordingly, other implementations are within the scope of the appended claims. In addition, while a particular feature of the present invention may have been disclosed with respect to only one of several implementations, such feature may be combined with one or more other features of the other implementations as may be desired and advantageous for any given or particular application. While various embodiments of the present invention have been described above, it should be understood that they have been presented by way of example only, and not limitation. In particular, it is, of course, not possible to describe every conceivable combination of components or methodologies for purposes of describing the claimed subject matter, but one of ordinary skill in the art may recognize that many further combinations and permutations of the present invention are possible. Thus, the breadth and scope of the present invention should not be limited by any of the above described exemplary embodiments; rather the scope of at least one embodiment of the invention is defined only in accordance with the following claims and their equivalents.

## Claims

1. A method to secure a user's interaction with a remotely accessible computer-based application, the method comprising performing at a client computing device the steps of:
capturing a 2D-barcode that has been received by the client computing device;
extracting message data from the captured 2D-barcode;
exchanging commands and responses with a user's personal authentication device;
determining input data as a function of said extracted message data;
transferring said determined input data to said user's personal authentication device;

2. The method of claim 1 further comprising the steps of:
receiving from the user's personal authentication device authentication data that have been generated by the user's personal authentication device;
obtaining a dynamic credential wherein the dynamic credential is a function of the received authentication data.

3. The method of claim 1 wherein the user's personal authentication device is locally connected to the client computing device through a local wired or wireless digital data connection.

4. The method of claim 1 wherein the authentication data are generated by the user's personal authentication device using a cryptographic algorithm parameterized with a secret key that is stored in the personal authentication device.

5. The method of any of the previous claims wherein exchanging commands and responses with a user's personal authentication device comprises sending to the user's personal authentication device at least part of the extracted message data.

6. The method of any of the previous claims wherein the dynamic credential is a function of at least part of the extracted message data.

7. The method of claim 5 wherein the authentication data have been generated by the user's personal authentication device as a function of said at least part of the extracted message data.

8. The method of any of the previous claims further comprising the step of making the obtained dynamic credential available for verification.

9. The method of claim 8 wherein making the obtained dynamic credential available for verification comprises displaying the obtained dynamic credential on the client computing device's display.

10. The method of claim 8 wherein making the obtained dynamic credential available for verification comprises forwarding the obtained dynamic credential to the remotely accessible computer-based application.

11. A system comprising a client computing device and a personal authentication device locally connected to said computing device through a local wired or wireless digital data connection, wherein:
the client computing device comprises a virtual scanner software component that, when executed on the client computing device, causes the client computing device to perform the steps of any of the previous method claims; and wherein
the personal authentication device is adapted to
receive input data from the virtual scanner software component over said local wired or wireless digital data connection;
generate authentication data using said received data.

12. The system of claim 11 wherein the personal authentication device is further adapted to return said generated authentication data to said client computing device.

13. A system comprising a client computing device and a personal authentication device, wherein:
the client computing device comprises a software component that, when executed on the client computing device, causes the client computing device to
capture a 2D-barcode that has been received by the client computing device;
extract message data from the captured 2D-barcode;
exchange commands and responses with a user's personal authentication device;
receive from the user's personal authentication device authentication data that have been generated by the user's personal authentication device;
obtain a dynamic credential wherein the dynamic credential is a function of at least part of the extracted message data and the received authentication data; and wherein
the personal authentication device is adapted to
receive said commands from said client computing device and return said responses to said client computing device;
generate said authentication data; and
return said authentication data to said client computing device.
